# EUROPEAN PATENT APPLICATION

(11) **EP 4 804 383 A1**
(43) Date of publication of application: **09.09.2026**
(21) Application number: 23957601.0
(22) Date of filing: 31.10.2023
(51) Int. Cl.: H02K 1/276

(54) **ROTOR AND ROTATING ELECTRIC MACHINE**

(71) Applicant: KABUSHIKI KAISHA TOSHIBA, Minato-ku Tokyo 105-0023 (JP)
(72) Inventor: MAKINO, Hiroaki, Kawasaki-shi, Kanagawa 212-0013 (JP); MORI, Daisuke, Kawasaki-shi, Kanagawa 212-0013 (JP); TERADA, Keisuke, Kawasaki-shi, Kanagawa 212-0013 (JP)
(74) Representative: AWA Sweden AB
(86) International application number: PCT/JP2023/039285
(87) International publication number: WO 2025/094273

(57) **Abstract**

According to the embodiment, a rotor (100) comprises: a rotor shaft (110); permanent magnets (130) located inside the rotor core (10) and arranged symmetrically with respect to an M-axis, and a rotor core (120). The rotor core (120) has the electromagnetic steel plates stacked such that the M axes overlap axially, wherein magnetic poles (101) are arranged evenly circumferentially and each magnetic pole includes a flux-barrier band formed substantially convexly toward the rotation center axis and connects one and other of the outer peripheral surface, accommodating the permanent magnets, non-magnetic regions, and bridges. The rotor core (120) has non-magnetic region connecting the outer peripheral surface (120x) and permanent magnet (130). As for the first and second flux barriers (122, 126), circumferential angle Θ_{q1} is larger than Θ_{q2}.when Θ_{d1} is larger than Θ_{d2}. An adjacent magnetic pole has a shape about the M-axis of the specified magnetic pole.

## Description

### [Technical Field]

The invention relates to a rotor, and a rotary electric machine.

### [Background Art]

As a permanent magnet motor, the so-called interior permanent magnet motor, in which permanent magnets are placed inside the iron core, is known. This interior permanent magnet motor is composed of a stator, in which stator coils are arranged on an almost cylindrical stator core with multiple stator slots, and a permanent magnet rotor, which is provided radially inward of the stator and is rotatable relative to the stator.

The permanent magnet rotor has a rotor shaft rotatably provided around a rotation center axis, and a rotor core that is externally fitted and fixed to this rotor shaft. The rotor core has magnet housing holes corresponding to the number of poles. Permanent magnets are housed in these magnet housing holes. With this configuration, in a permanent magnet motor, when current is supplied to the stator coil, rotational torque is applied to the rotor due to the interaction between the magnetic flux generated on the primary side (stator side) and the magnetic flux of the permanent magnets in the rotor.

### [Prior Art Documents]

### [Patent Literature]

Patent Document 1: Japanese Patent No. 3769943
Patent Document 2: Japanese Patent Application Laid-open No. 2001-186699
Patent Document 3: Japanese Patent No. 3938726
Patent Document 4: Japanese Patent Application Laid-open No. 2012-29351

### [Summary of Invention]

### [Problem to be Solved by the Invention]

In general, the presence of stator slots creates magnetic irregularities between the rotor and the stator, and these irregularities cause variations in the torque on the rotor (torque ripple), leading to mechanical vibrations and noise during rotation.

As an effective means of reducing torque ripple, it is known to apply a method called skewing, in which the electromagnetic steel plates of the stator or rotor are stacked in the axial direction while being shifted in the circumferential direction which is the direction of rotation. However, in this case, there was a problem of increased labor and a higher number of parts during manufacturing.

For this reason, several other methods are known for reducing torque ripple.

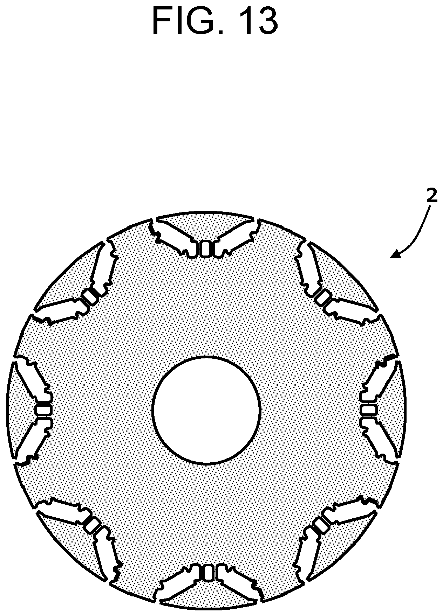

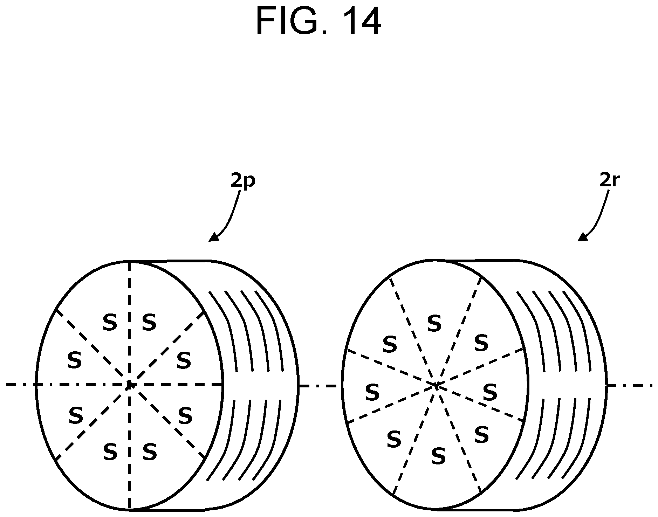

FIG. 13 is a cross-sectional view showing an example pattern of a conventional rotor core 2. FIG. 14 is a schematic diagram showing the laminated arrangement of a conventional rotor core.

In the pattern of the rotor core 2 shown in FIG. 13, each magnetic pole is symmetrical in the circumferential direction. As shown in FIG. 14, this method involves stacking laminations 2p, in which each magnetic pole is symmetrical, and laminations 2r that are shifted in the circumferential direction relative to laminations 2p, in the axial direction. By stacking in the axial direction with a circumferential shift, the torque ripple is reduced, that is, a skew effect is obtained. However, in such skewed rotors, the magnets embedded in the rotor are also skewed, and at locations where different laminations are adjacent, a demagnetizing field concentrates at the ends of the magnets, which causes demagnetization at those points.

It is also known that by making the shapes of the permanent magnets and their housing holes asymmetrical for each pole, the torque ripple generated at each pole can be compensated.

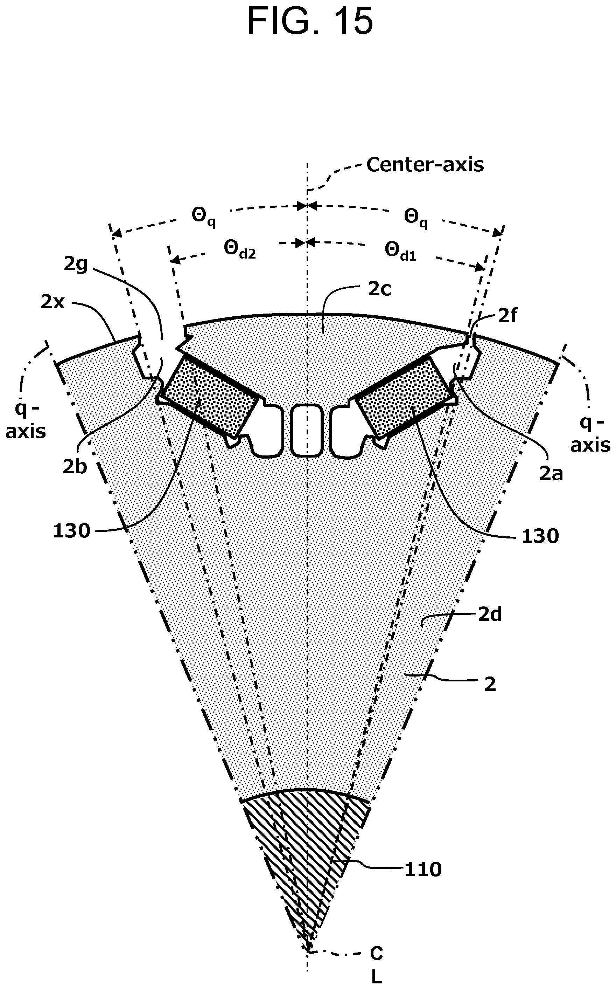

FIG. 15 is a partial cross-sectional view of the first pattern portion illustrating a second example of the configuration of the conventional rotor core 2. FIG. 15 shows a pattern within a single magnetic pole. Two permanent magnets 130 of the same shape are arranged symmetrically with respect to the central axis. In addition, a first magnet housing hole 2a and a second magnet housing hole 2b are formed on both sides of the central axis. Furthermore, a first flux barrier 2f, which connects the first magnet housing hole 2a to the outer peripheral surface 2x of the rotor core 2, and a second flux barrier 2g, which connects the second magnet housing hole 2b to the outer peripheral surface 2x of the rotor core 2, differ from each other.

The shape of the inner iron core portion 2d, which is the radially inner part of the first magnet housing hole 2a and the second magnet housing hole 2b, is symmetrical with respect to the central axis. On the other hand, the shape of the outer core section 2c, which is the radially outer part of the first magnet housing hole 2a and the second magnet housing hole 2b, is asymmetrical with respect to the central axis. This is a method of canceling torque ripple by using a second pattern portion obtained by reversing the front and back of the first pattern portion.

However, in the case of motors that utilize reluctance torque, there has been a problem in which the skewing effect was insufficient.

It is also known how to asymmetrize the stator slots. However, there have been problems such as a reduction in average torque and insufficient skewing effects.

A problem to be solved by the present invention is to provide a rotor and a rotary electric machine that can ensure the effect of reducing torque ripple without skewing the permanent magnets even in a rotary electric machine that actively utilizes reluctance torque.

### [Means for Solving the Problem]

To achieve the object described above, a rotor, comprising: a rotor shaft extending in the axial direction of a rotation center axis; a plurality of permanent magnets extending in the axial direction and arranged symmetrically with respect to an M-axis that extends perpendicularly from the rotation center axis when viewed in a cross-section perpendicular to the rotation center axis; and a rotor core mounted radially outside the rotor shaft, the rotor shaft having the electromagnetic steel plates stacked such that the M axes overlap when viewed in the axial direction, wherein magnetic poles are arranged evenly in the circumferential direction, each magnetic pole including a flux-barrier band that is formed substantially convexly toward the rotation center axis and connects one side of an outer peripheral surface with other side of the outer peripheral surface, the flux barrier band having regions accommodating the permanent magnets, non-magnetic regions, and bridges, the rotor core comprising the non-magnetic regions connecting the outer peripheral surface and the permanent magnets, wherein the magnetic poles include outer core sections positioned outside in the radial direction of the flux-barrier band and an inner core section positioned inside in the radial direction of the flux-barrier band, when a boundary point farther from the M-axis is defined as a boundary point P₁₁, a boundary point closer to the M-axis is defined as a boundary point P₂₁ among the boundary points between the outer edge forming the outer peripheral surface of the outer core section and the outer edge facing the non-magnetic region, and a boundary point closer to the boundary point P₁₁ is defined as a boundary point P₁₂, and a boundary point closer to the boundary point P₂₁ is defined as a boundary point P₂₂ among the boundary points between the outer edge forming the outer peripheral surface of the inner core section and the outer edge facing the non-magnetic region, and when a circumferential angle formed by a line connecting boundary point P₁₁ to the rotation center axis and the M-axis is defined as circumferential angle Θ_{d1}, a circumferential angle formed by a line connecting boundary point P₁₂ to the rotation center axis and the M-axis is defined as circumferential angle Θ_{q1}, a circumferential angle formed by a line connecting boundary point P₂₁ to the rotation center axis and the M-axis is defined as circumferential angle Θ_{d2}, and a circumferential angle formed by a line connecting boundary point P₂₂ to the rotation center axis and the M-axis is defined as circumferential angle Θ_{q2},
circumferential angle Θ_{q1} is larger than circumferential angle Θ_{q2}.in a case that circumferential angle Θ_{d1} is larger than circumferential angle Θ_{d2}, and an adjacent magnetic pole has a shape that is inverted with respect to the M-axis of the specified magnetic pole when viewed from a specified magnetic pole.

### [Brief Description of Drawings]

[FIG. 1]

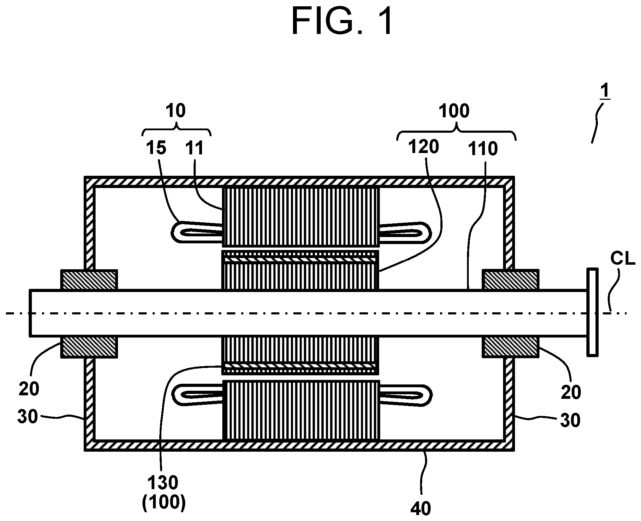

   FIG. 1 is a longitudinal cross-sectional view showing the configuration of the rotary electric machine according to the first embodiment.
[FIG. 2]

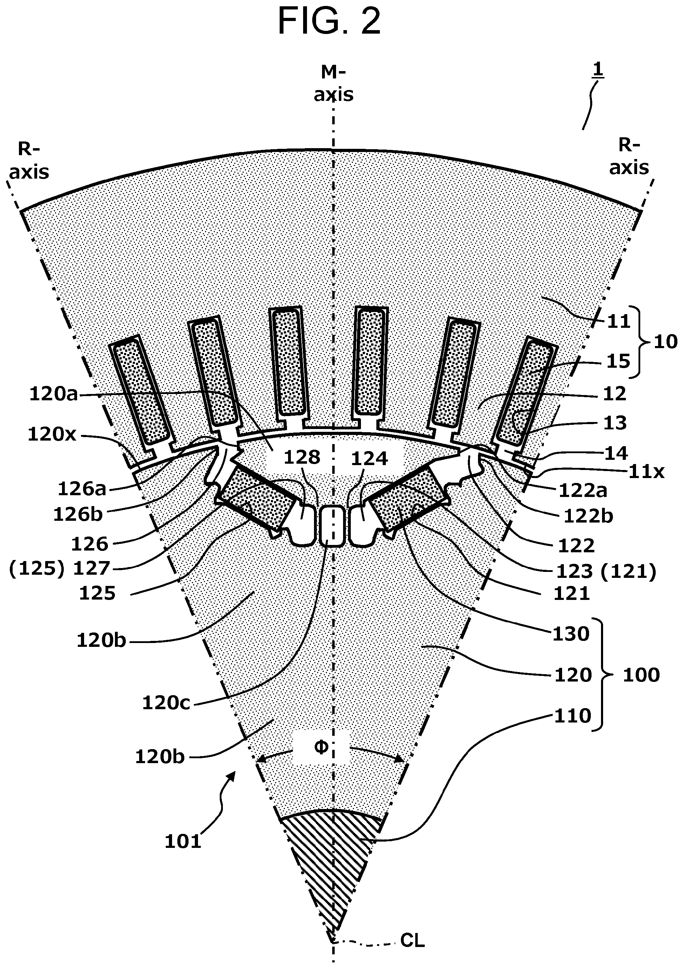

   FIG. 2 is a first partial cross-sectional view showing the configuration of a rotary electric machine according to the first embodiment.
[FIG. 3]

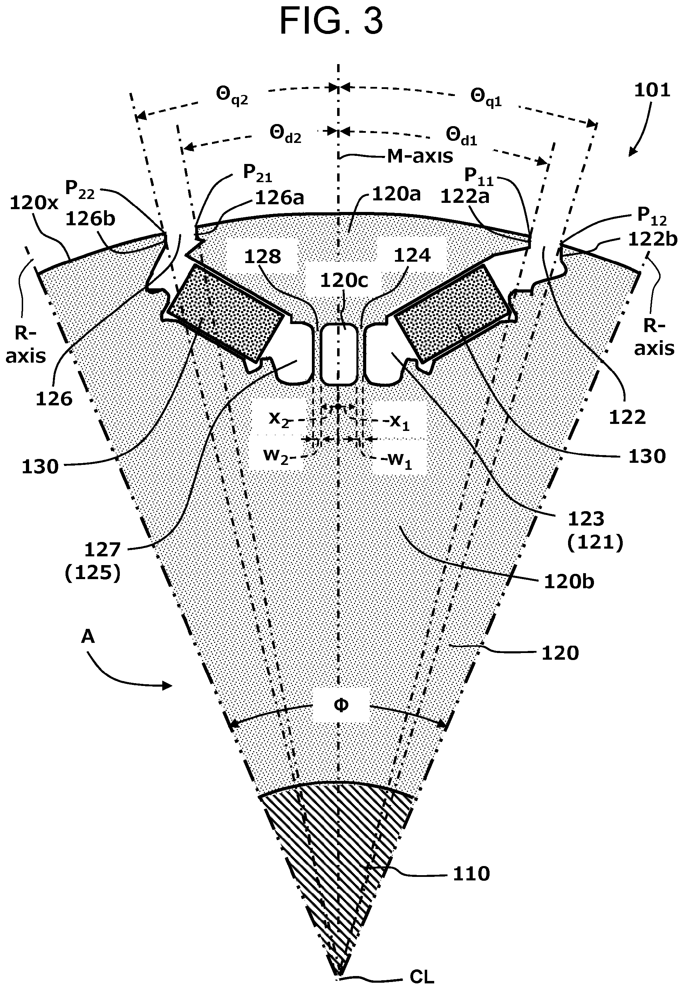

   FIG. 3 is a partial cross-sectional view of the first pattern section illustrating the features of the rotor according to the first embodiment.
[FIG. 4]

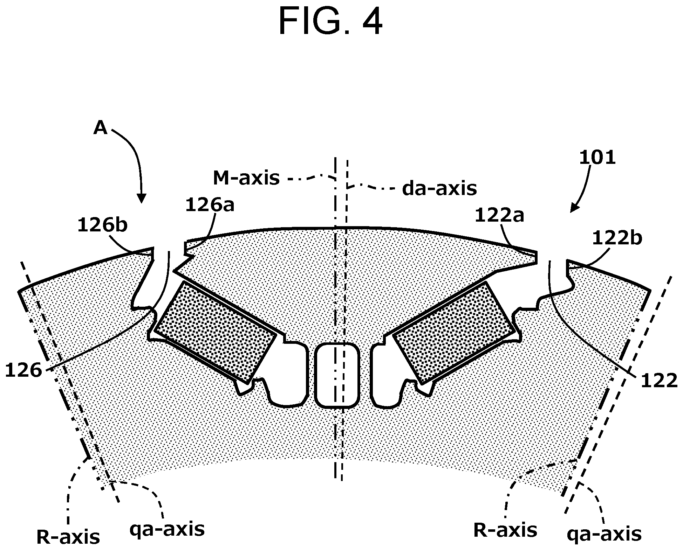

   FIG. 4 is an explanatory diagram showing changes in the d-axis and q-axis in the first pattern section illustrating the characteristics of the rotor according to the first embodiment.
[FIG. 5]

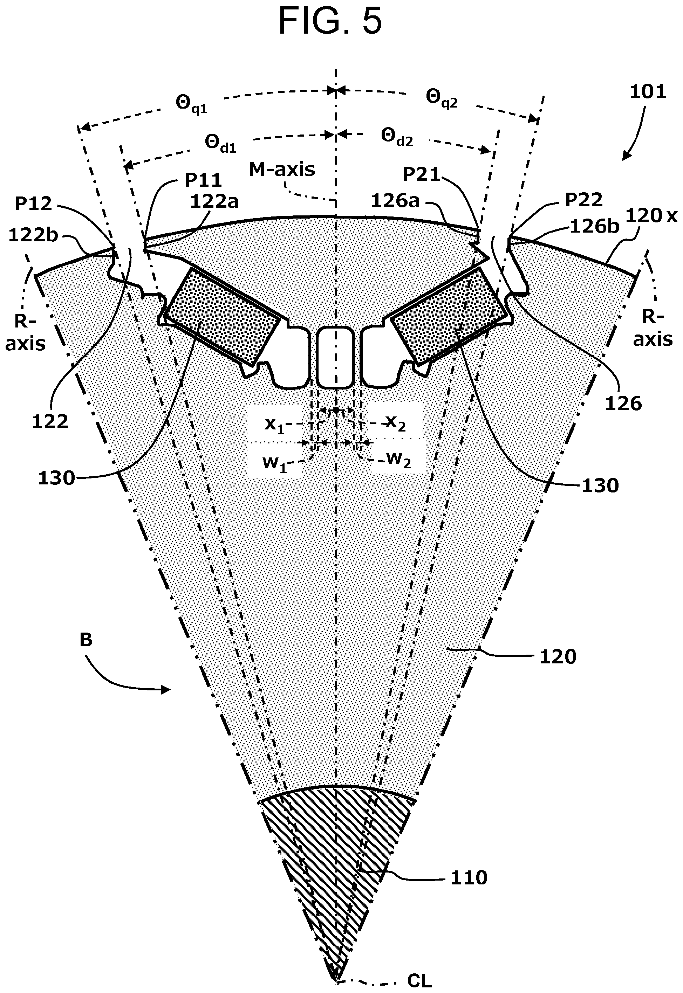

   FIG. 5 is a partial cross-sectional view of the second pattern section illustrating the features of the rotor according to the first embodiment.
[FIG. 6]

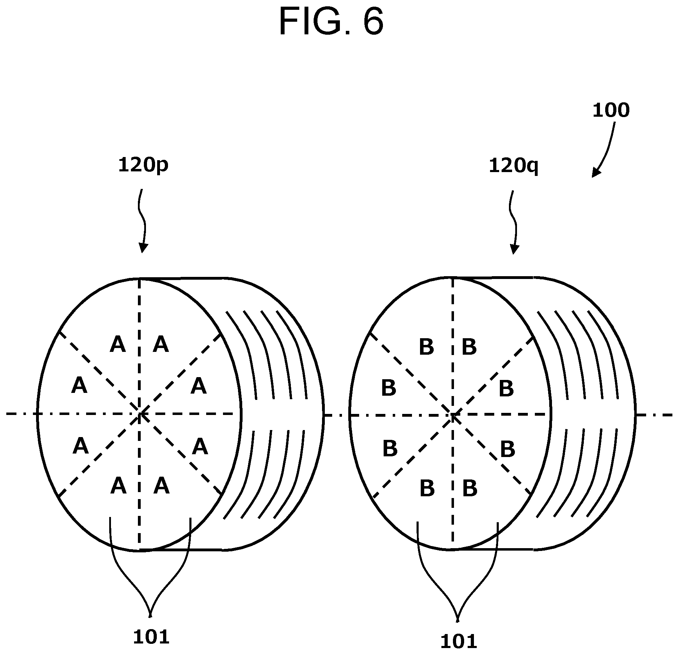

   FIG. 6 is a schematic diagram showing the laminated arrangement of the rotor core according to the first embodiment.
[FIG. 7]

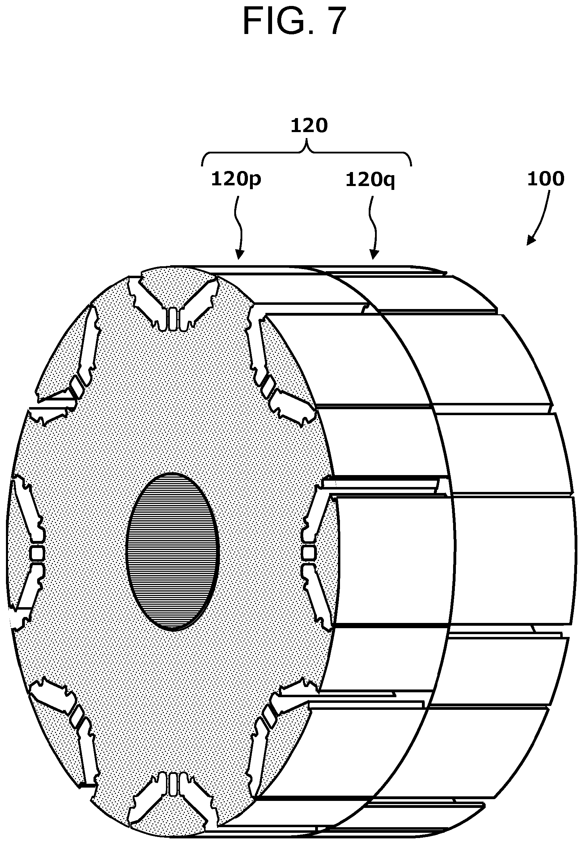

   FIG. 7 is a perspective view showing the overall configuration of the rotor core according to the first embodiment.
[FIG. 8]

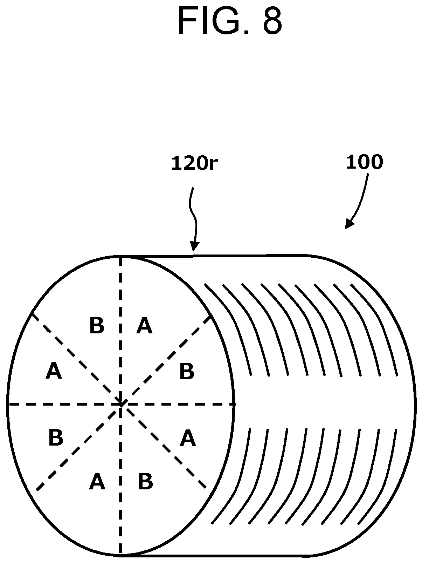

   FIG. 8 is a schematic diagram showing a first modified example of the laminated arrangement of the rotor core according to the first embodiment.
[FIG. 9]

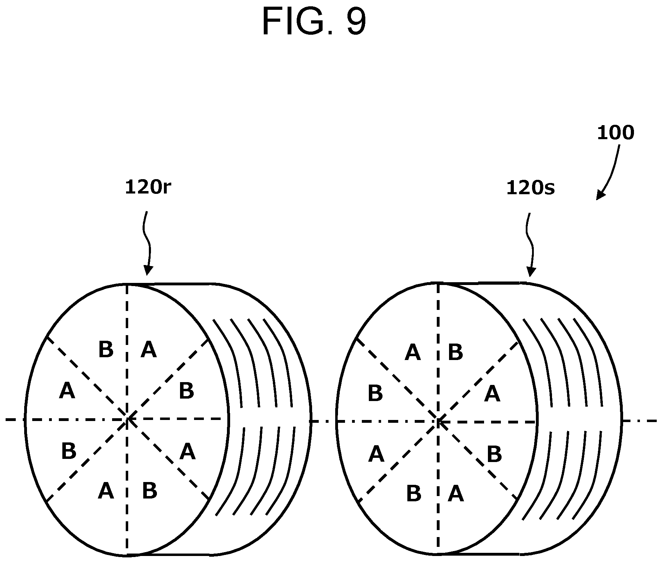

   FIG. 9 is a schematic diagram showing a second modified example of the laminated arrangement of the rotor core according to the first embodiment.
[FIG. 10]

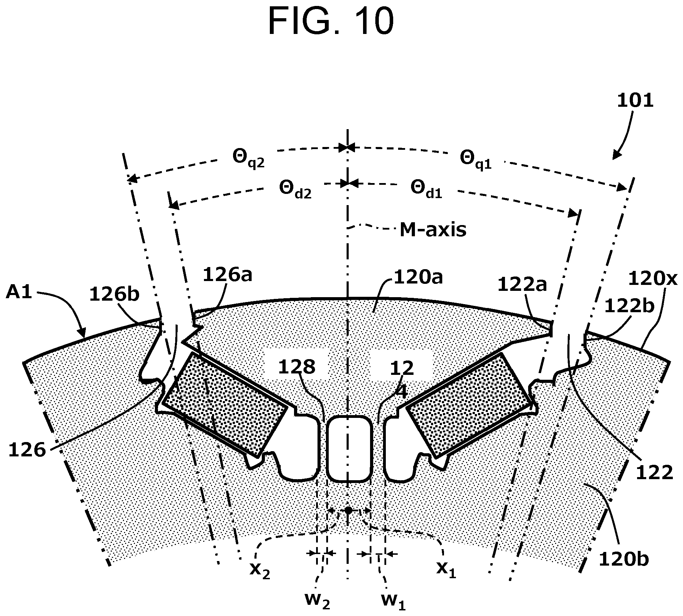

   FIG. 10 is a partial cross-sectional view showing a part of the first pattern portion for explaining the features of the rotor according to the second embodiment.
[FIG. 11]

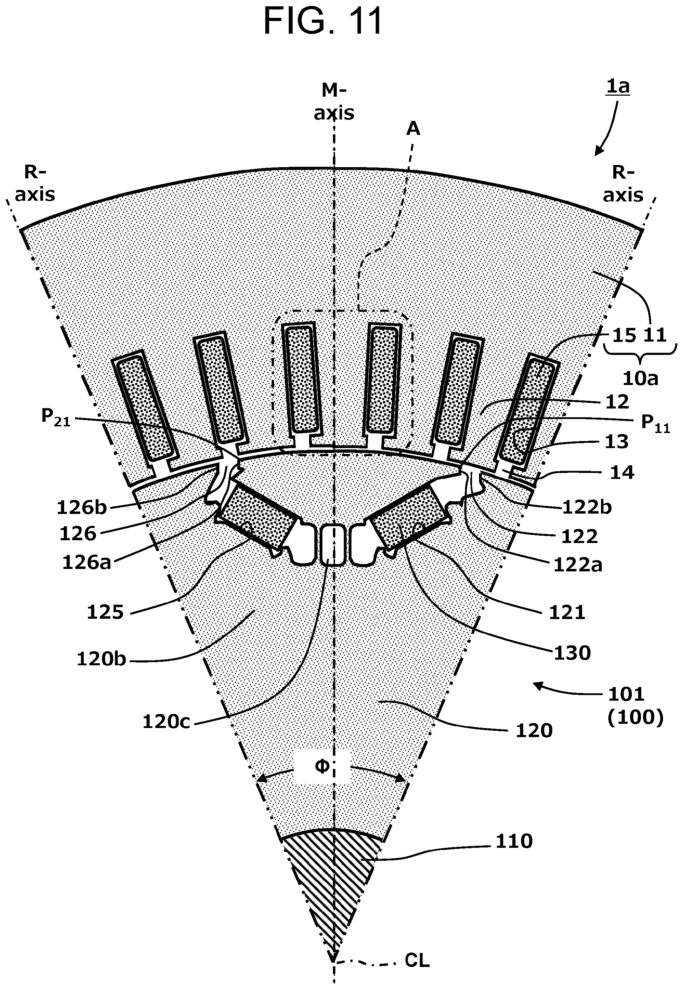

   FIG. 11 is a partial cross-sectional view showing the configuration of a rotary electric machine according to the third embodiment.
[FIG. 12]

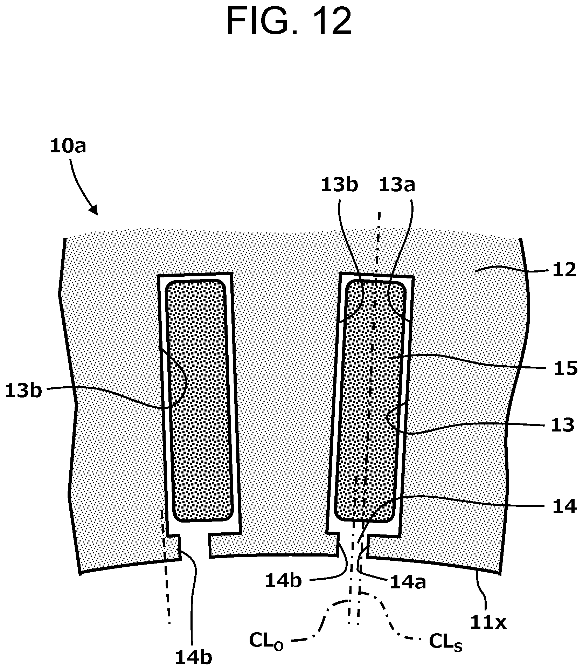

   FIG. 12 is a partial cross-sectional view showing a part of the stator for explaining the characteristics of the rotary electric machine according to the third embodiment.
[FIG. 13]
   FIG. 13 is a cross-sectional view showing an example pattern of a conventional rotor core.
[FIG. 14]
   FIG. 14 is a schematic diagram showing the laminated arrangement of a conventional rotor core.
[FIG. 15]
   FIG. 15 is a partial cross-sectional view of the first pattern section, illustrating a second example of the configuration of the conventional rotor core.

### [Description of Embodiments]

A rotor and a rotary electric machine according to an embodiment of the present invention will be described with reference to the drawings. Here, identical or similar parts are given the same reference numerals, and redundant descriptions are omitted.

### [First embodiment]

FIG. 1 is a longitudinal cross-sectional view showing the configuration of the rotary electric machine 1 according to the first embodiment.

The rotary electric machine 1 includes a rotor 100, a stator 10, bearings 20, bearing brackets 30, and a frame 40.

The rotor 100 includes a rotor shaft 110 extending in a direction parallel to the rotation center axis CL (axial direction), a rotor core 120 attached to the radially outer side of the rotor shaft 110, and a plurality of permanent magnets 130 housed inside the rotor core 120. The rotor core 120 is formed with laminating electromagnetic steel sheets.

The stator 10 includes a stator core 11 arranged to surround the rotor core 120 radially outward across a gap therebetween, and a stator winding 15 wound around the stator core 11.

The bearings 20 are arranged on both outer sides of the rotor core 120 in the axial direction of the rotor shaft 110 and rotatably supports the rotor shaft 110. The bearing bracket 30 statically supports each bearing 20. The frame 40 is cylindrical, with its both ends coupled to the respective bearing brackets 30, supporting each of the bearing brackets 30.

FIG. 2 is a first partial cross-sectional view showing the configuration of a rotary electric machine 1 according to the first embodiment. FIG. 3 is a partial cross-sectional view of the first pattern section A illustrating the features of the rotor 100 according to the first embodiment. Both show a cross-section perpendicular to the rotation center axis CL.

### <Regarding the stator 10>

As shown in FIG. 2, a plurality of stator slots 13 are formed at intervals in the circumferential direction on the inner peripheral side of the cylindrical stator core 11 of the stator 10. A stator tooth 12 is formed by each pair of adjacent stator slots 13. A straight portion of the stator winding 15 is housed in each stator slot 13. On the radially inner side of each stator slot 13, a slot opening 14, which is a non-magnetic region communicating with the inner peripheral surface 11x of the stator core 11, is formed to prevent short-circuiting of the magnetic flux generated by the stator winding 15. In a cross-section perpendicular to the rotation axis CL, the centerline (not shown) of each slot opening 14 in the circumferential direction coincides with the centerline (not shown) of the corresponding stator slot 13 in the circumferential direction.

### <Regarding the rotor 100>

Figure 3 shows the area of a single magnetic pole 101. That is, the rotor 100 has multiple regions with a circumferential angle Φ, which are equally divided mechanical angle segment of the rotor in the circumferential direction. Hereafter, this region will be referred to as magnetic pole 101. The sides of the magnetic pole in the circumferential direction are referred to as R-axes. Furthermore, the geometrical centerline at the midpoint between the two R-axes in the circumferential direction is referred to as M-axis. In other words, the reference line along which the two permanent magnets 130 are symmetric is the M-axis, and the R-axis is the axis geometrically set halfway between adjacent M axes.

Figure 3 shows the case where a part of the rotor core 120 of the magnetic pole 101 has the cross-sectional shape of the first pattern section A. Figure 2 illustrates the content of Figure 3, and further shows the part of the outer stator 10. The cross-sectional shape shown in Figure 3 is formed in each electromagnetic steel sheet that constitutes the rotor core 120. The same applies to each of the other patterns as well.

At each magnetic pole 101, as mentioned above, the two permanent magnets 130 are arranged symmetrically with respect to the M-axis. Here, the cross-sectional shape and dimensions of the permanent magnets 130 are identical to each other. By identical, it is meant that they match within manufacturing tolerances of the design.

As shown in FIG. 2, the rotor core 120 has a first magnet housing hole 121 and a second magnet housing hole 125 formed to accommodate two permanent magnets 130 on both sides in the circumferential direction across the M-axis.

The first magnet housing hole 121 has a first radially inner part 123 that extends in the direction of the M-axis. Here, the first magnet housing hole 121 is formed so as to penetrate the rotor core 120. A first flux barrier 122 is also formed to communicate the first magnet housing hole 121 with the outside of the outer peripheral surface 120x of the rotor core 120 (outer space). The first flux barrier 122 is a non-magnetic region that replaces the top bridge.

The second magnet housing hole 125 has a second radially inner part 127 extending in the direction of the M-axis. Here, the second magnet housing hole 125 is formed so as to penetrate the rotor core 120. In addition, a second flux barrier 126 is formed to communicate the second magnet housing hole 125 with the outside of the outer peripheral surface 120x of the rotor core 120 (outer space). The second flux barrier 126 is a non-magnetic region that replaces the top bridge.

Between the first magnet housing hole 121 and the second magnet housing hole 125, more specifically, between the first radially inner part 123 and the second radially inner part 127, a central flux barrier 120c across the M-axis is formed. A first bridge 124 extending in the radial direction is formed by the first radially inner part 123 and the central flux barrier 120c, which are adjacent to each other in the circumferential direction. A second bridge 128 extending in the radial direction is formed by the second radially inner part 127 and the central flux barrier 120c, which are adjacent to each other in the circumferential direction.

As described above, the rotor core 120 includes a flux barrier band that has non-magnetic regions such as the first magnet housing hole 121, the first flux barrier 122, the second magnet housing hole 125, the second flux barrier 126, and the central flux barrier 120c, as well as the first bridge 124 and the second bridge 128. The flux barrier band is formed in a roughly convex shape toward the rotation center axis CL between two points on the outer peripheral surface 120x. Additionally, the flux barrier band is connected to the outside of the outer peripheral surface 120x (outer space) through the first flux barrier 126, which is a non-magnetic region. In other words, in the flux barrier band, the region from the permanent magnet 130 on the right side in FIG. 3 to the outer peripheral surface 120x is a non-magnetic region. In the flux barrier band, the second flux barrier 126, which is a non-magnetic region, is connected to the outside of the outer peripheral surface 120x (outer space). In other words, the region from the permanent magnet 130 on the left side in FIG. 3 to the outer peripheral surface 120x is a non-magnetic region.

As a result of these factors, the magnetic pole 101 is divided into an outer core section 120a, which is radially outward of the first magnet housing hole 121 and the second magnet housing hole 125, and an inner core section 120b, which is radially inward of the first magnet housing hole 121 and the second magnet housing hole 125, as shown in FIG. 3. The outer core section 120a and the inner core section 120b are coupled by the first bridge 124 and the second bridge 128. The centrifugal force applied to the outer core section 120a during rotation of the rotor 100 acts as a tensile force on the first bridge 124 and the second bridge 128. The centrifugal force is supported by these bridges, and is transmitted to the inner core section 120b.

As shown in FIG. 3, let the distance from the M-axis of the first bridge 124 be x₁, the distance from the M-axis of the second bridge 128 be x₂, the circumferential width of the first bridge 124 be w₁, and the circumferential width of the second bridge 128 be w₂. In this embodiment, x₁ = x₂ holds, and w₁ = w₂ holds.

In this embodiment, the central flux barrier 120c is formed across the M-axis, and as a result, the first bridge 124 and the second bridge 128 are formed, as illustrated by this example. However, the invention is not limited to this configuration. For example, the central flux barrier 120c may be absent, and a single bridge may be formed on or near the M-axis between the first radially inner part 123 and the second radially inner part 127.

Next, with reference to Figures 2 and 3, the relationship between the first flux barrier 122 and the second flux barrier 126, which are the characteristic parts of this embodiment, will be explained.

The first flux barrier 122, which communicates the first magnet housing hole 121 with the outer peripheral surface 120x of the rotor core 120, has a first flux barrier outer boundary 122a, which is the boundary of the portion of the outer core section 120a of the rotor core 120 facing the first flux barrier 122, and a first flux barrier inner boundary 122b, which is the boundary of the portion of the inner core section 120b of the rotor core 120 facing the first flux barrier 122.

In addition, the second flux barrier 126, which connects the second magnet housing hole 125 to the outer peripheral surface 120x of the rotor core 120, has a second flux barrier outer boundary 126a, which is the boundary of the portion of the outer core section 120a of the rotor core 120 facing the second flux barrier122, and a second flux barrier inner boundary 126b, which is the boundary of the portion of the inner core section 120b facing the second flux barrier 122.

Unless otherwise specified below, explanations regarding planes (cross-sections) refer to cross-sections perpendicular to the rotation center axis CL. In a cross-section perpendicular to the rotation center axis CL shown in FIG. 3, among the boundary points between the outer edge forming the outer peripheral surface 120x of the outer core section 120a and the outer edge facing the non-magnetic region (first flux barrier 122), the one farther from the M-axis is defined as boundary point P₁₁, and among the boundary points between the outer edge forming the outer peripheral surface 120x of the inner core section 120b and the outer edge facing the non-magnetic region (first flux barrier 122), the one closer to boundary point P₁₁ is defined as boundary point P₁₂.

Additionally, among the boundary points between the outer edge forming the outer peripheral surface 120x of the outer core section 120a and the outer edge facing the non-magnetic region (second flux barrier 126), the one closer to the M-axis is defined as boundary point P₂₁, and among the boundary points between the outer edge forming the outer peripheral surface of the inner core section 120b and the outer edge facing the non-magnetic region (second flux barrier 126), the one closer to boundary point P₂₁ is defined as boundary point P₂₂.

Furthermore, the circumferential angle formed between the line connecting boundary point P₁₁ and the rotation center axis CL and the M-axis is defined as circumferential angle Θ_{d1}; the circumferential angle formed between the line connecting boundary point P₁₂ and the rotation center axis CL and the M-axis is defined as circumferential angle Θ_{q1}; the circumferential angle formed between the line connecting boundary point P₂₁ and the rotation center axis CL and the M-axis is defined as circumferential angle Θ_{d2}; and the circumferential angle formed between the line connecting boundary point P₂₂ and the rotation center axis CL and the M-axis is defined as circumferential angle Θ_{q2}.

Regarding the relationship between the first flux barrier 122 and the second flux barrier 126, when the circumferential angle Θ_{d1} is larger than the circumferential angle Θ_{d2}, the circumferential angle Θ_{q1} is larger than the circumferential angle Θ_{q2}.

As a result, in this embodiment, there are portions in the magnetic pole 101 that are asymmetrical with respect to the M-axis. That is, the relationship between the first magnet housing hole 121 and the second magnet housing hole 125 has portions that are line-symmetrical with respect to the M-axis, while also having portions that are asymmetrical, that is, not line-symmetrical.

That is, the first magnet housing hole 121 and the second magnet housing hole 125, except for the connection parts with the first flux barrier 122 and the second flux barrier 126, respectively, are symmetrically positioned with respect to the M-axis in a cross-section perpendicular to the rotation center axis CL.

On the other hand, the first flux barrier 122 and the second flux barrier 126 each form asymmetrical parts with respect to the M-axis in a cross-section perpendicular to the rotation center axis CL.

Here, the first point of asymmetry is that, as mentioned above, the circumferential angle Θ_{d1} is larger than the circumferential angle Θ_{d2}, and the circumferential angle Θ_{q1} is larger than the circumferential angle Θ_{q2}. In other words, in the outer core section 120a, the angular position from the M-axis of the first flux barrier outer boundary 122a of the first flux barrier 122 is greater than the angular position from the M-axis of the second flux barrier outer boundary 126a of the second flux barrier 125, meaning it is further away from the M-axis. Similarly, in the inner core section 120b, the angular position from the M-axis of the first flux barrier inner boundary 122b of the first flux barrier 122 is greater than the angular position from the M-axis of the second flux barrier inner boundary 126b of the second flux barrier 125, meaning it is farther from the M-axis.

Here, the second point of asymmetry is that the corresponding portions of the first flux barrier outer boundary 122a of the first flux barrier 122 and the second flux barrier outer boundary 126a of the second flux barrier 126, as well as the corresponding portions of the first flux barrier inner boundary 122b of the first flux barrier 122 and the second flux barrier inner boundary 126b of the second flux barrier 126, have different shapes. It should be noted that it is sufficient if either the shape of the first flux barrier outer boundary 122a and the second flux barrier outer boundary 126a is different, or the shape of the first flux barrier inner boundary 122b and the second flux barrier inner boundary 126b is different.

FIG. 4 is an explanatory diagram showing changes in the d-axis and q-axis in the first pattern section A, illustrating the characteristics of the rotor 100 according to the first embodiment. In Figure 4, the M-axis and the two R-axes are geometric axes related to the magnetic poles 101. With respect to the M-axis, if the rotor core 120 is completely line-symmetrical like the permanent magnet 130, the d-axis, which is the center of the electromagnetic magnetic pole, and the q-axis, which lies between the magnetic poles, coincide with the M-axis and R-axis, respectively. Figure 4 shows that these axes shift due to the cause indicated by the first point of asymmetry mentioned above.

First, the d-axis will be explained. In the outer core section 120a, the first flux barrier outer boundary 122a of the first flux barrier 122 is located farther from the M-axis than the second flux barrier outer boundary 126a of the second flux barrier 126. As a result, the distribution of the magnetic flux generated by the permanent magnet 130 going out to the outer peripheral portion of the rotor core 120 is shifted in the circumferential direction, causing the position of the d-axis to shift toward the first flux barrier 122 side from the M-axis position. The resulting position of the d-axis is indicated as the da-axis.

Next, the q-axis will be explained. In the inner core section 120b, the first flux barrier inner boundary 122b of the first flux barrier 122 is farther from the M-axis than the second flux barrier inner boundary 126b of the second flux barrier 126. As a result, the reluctance component becomes asymmetric, causing the position of the q-axis to shift from the position of the M-axis toward the first flux barrier 122 side. The resulting position of the q-axis is indicated as the qa-axis.

### <Regarding the second pattern section B>

FIG. 5 is a partial cross-sectional view of the second pattern section B illustrating the features of the rotor 100 according to the first embodiment. FIG. 5 is viewed from the same direction as FIGS. 2 to 4. FIG. 5 is a figure obtained by flipping FIG. 3 left and right with respect to the M-axis. For clarity, the reference numerals are shown in the same positions as in the left-right flipped view. That is, the first pattern section A and the second pattern section B are mirror-symmetrical with respect to the M-axis. Specifically, the left side of the M-axis of the first pattern section A is symmetrical to the right side of the M-axis of the second pattern section B, and the right side of the M-axis of the first pattern section A is symmetrical to the left side of the M-axis of the second pattern section B. In other words, the first pattern section A and the second pattern section B are left-right flipped with each other. That is, the cross-sectional shape of the second pattern section B can be said to be a mirrored cross-sectional shape of the both sides, i.e., left and right, of the cross-sectional shape of the first pattern section A with respect to the M-axis. Alternatively, the relationship between the first pattern section A and the second pattern section B is practically equivalent to using a flipped version of the electromagnetic steel plate of the first pattern section A as the electromagnetic steel plate of the second pattern section B. In other words, the first pattern section A and the second pattern section B can be said to be inverted with respect to each other.

In the second pattern section B shown in Figure 5, the parts that are symmetrical to the first pattern section A with respect to the M-axis, apart from the difference in sign, essentially overlap with the first pattern section A in terms of shape and dimensions. Therefore, in the second pattern section B, the components that are essentially different from the first pattern section A, ignoring the sign, are the first flux barrier 122 and the second flux barrier 126.

### <Explanation of the lamination of rotor core 120 >

Fig. 6 is a schematic diagram showing the laminated arrangement of the rotor core 120 according to the first embodiment. Figure 7 is a perspective view showing the overall configuration of the rotor core 120 according to the first embodiment.

The rotor core 120 includes a first laminated section 120p and a second laminated section 120q arranged in series with the first laminated section 120p in the axial direction. Each of the first laminated section 120p and the first laminated section 120p are each formed by laminating common electromagnetic steel sheets.

The first laminated section 120p is composed of a plurality of first pattern sections A arranged in the circumferential direction. The second laminated section 120q is composed of a plurality of second pattern sections B arranged in the circumferential direction. In Figure 6, an example where the magnetic poles 101 are eight poles is shown, but this is not limiting, and it may have four or more poles. The same applies hereinafter.

The first laminated section 120p and the second laminated section 120q are arranged so that their respective M-axes lie on the same line. As a result, symmetrical parts of the first pattern section A and the second pattern section B overlap in the axial direction. For example, as shown in FIG. 2, the first magnet housing hole 121 and the second magnet housing hole 125 of the first pattern section A overlap in the axial direction with the second magnet housing hole 125 and the first magnet housing hole 121 of the second pattern section B. Consequently, the permanent magnet 130 can extend through and pass along the axial direction through both the first laminated section 120p and the second laminated section 120q. This forms the first laminated configuration state of the rotor core 120.

### <Operation>

The rotor 100 and rotary electric machine 1 according to the present embodiment, which have the above configuration, generate a phase difference between the phase of the torque ripple of one laminated section and the phase of the torque ripple of the other laminated section due to the asymmetric portions between the rotor core 120 in the first laminated section 120p and the rotor core 120 in the second laminated section 120q. This phase difference cancels out the torque ripples of each other, achieving an excellent skew effect. In a rotary electric machine that uses both magnetic torque and reluctance torque, in the conventional configuration shown in FIG. 15, only the d-axis in each laminated section is shifted, so the phase difference occurs only in the torque ripple caused by the magnetic torque, resulting in an insufficient skew effect. In contrast, in the present embodiment, both the d-axis and q-axis in each laminated section can be shifted, creating a phase difference in both magnetic torque and reluctance torque, thereby producing an excellent skew effect. Moreover, since the magnets can be aligned axially without skewing, unintentional demagnetization of the magnets can be prevented.

### <Example of a Deformation>

FIG. 8 is a schematic diagram showing a first modified example of the laminated arrangement of the rotor core 120 according to the first embodiment. The rotor core 120 has a third laminated section 120r.

The third laminated section 120r has, in the circumferential direction, the first pattern section A and the second pattern section B arranged alternately. This forms the second laminated configuration state of the rotor core 120. In this way, by mixing asymmetric parts within the same plane, as in the embodiment, a phase difference in the torque ripple can be generated between pattern sections A and B, thereby providing an excellent skewing effect.

Figure 9 is a schematic diagram showing a second modified example of the laminated configuration of the rotor core 120 according to the first embodiment. The rotor core 120 has a third laminated section 120r similar to that of the first modified example, and a fourth laminated section 120s laminated in series in the axial direction, connected to the third laminated section 120r.

The fourth laminated section 120s is shifted relative to the third laminated section 120r in the circumferential direction by the mechanical circumferential angle Φ (FIG. 3) corresponding to one magnetic pole 101, either clockwise or counterclockwise. It can also be considered as a combination of the configuration of FIG. 6 and the configuration of FIG. 8. As a result, the third laminated configuration state of the rotor core 120 is formed.

In this way, by mixing asymmetric parts both in the same plane and along the axial direction, it is possible, as in the embodiment, to create a phase difference in torque ripple between pattern section A and pattern section B, thereby producing an excellent skew effect. In the configuration shown in FIG. 8, by alternately arranging different pattern sections in the circumferential direction, lower-order ring modes (in this example, the 4th order ring mode) that do not occur in configurations where the same shape is repeated circumferentially are generated as a side effect. This can potentially increase mechanical vibration and noise during rotation. On the other hand, regarding the electromagnetic forces of the aforementioned lower-order ring mode, in the configuration shown in FIG. 9, although they occur in each laminated section, as a whole, the laminated sections are in an inverted phase relationship between the third laminated section 120r and the fourth laminated section 120s. Therefore, by integrating the third laminated section 120r with the fourth laminated section 120s, the electromagnetic forces of the lower-order ring mode are canceled, resolving the issues mentioned above.

### <Effect>

In the above-described embodiment and its modified examples, by combining the rotor cores 120 such that the direction of asymmetry is reversed, it is possible to improve the skewing effect.

### [Second embodiment]

FIG. 10 is a partial cross-sectional view showing a part of the first pattern section A1 for explaining the features of the rotor 100a according to the second embodiment.

In the first pattern section A1, the first and second points where the magnetic poles 101 described in the first embodiment are asymmetric with respect to the M-axis are similar to the first pattern section A of the first embodiment.

In this embodiment, the magnetic poles 101 further have third and fourth points that are asymmetrical with respect to the M-axis.

As the third point, the distance x₁ between the end face on the M-axis side of the first bridge 124 and the M-axis is formed to be greater than the distance x₂ between the end face on the M-axis side of the second bridge 128 and the M-axis.

As the fourth point, the circumferential width w₁ of the first bridge 124 is formed to be larger than the circumferential width w₂ of the second bridge 128.

From the characteristic of the aforementioned magnetic pole 101 being asymmetrical with respect to the M-axis at the first point, in the outer core section 120a, the cross-sectional area of the side of the first flux barrier 122 from the M-axis becomes larger compared to the cross-sectional area of the second flux barrier 126 from the M-axis. Therefore, when the centrifugal force applied to the outer core section 120a is borne by the first bridge 124 and the second bridge 128, the burden on the first bridge 124 becomes greater than that on the second bridge 128. Moreover, when the rotational speed changes, a moment is applied to the first bridge 124 and the second bridge 128, similarly resulting in a greater load on the first bridge 124 side.

The feature of the third point in this embodiment improves the load-bearing capacity for moments on the first bridge 124 side, thereby providing an effect of properly distributing the load of moments added when changing the rotational speed.

The feature described as the fourth point in this embodiment improves the tensile load-bearing capacity of the first bridge 124 side, resulting in the effect of appropriately distributing the centrifugal force applied to the outer core section 120a.

As described above, the above configuration of this embodiment can further ensure the structural integrity of the rotor core 120.

### [Third embodiment]

Figure 11 is a partial cross-sectional view showing the configuration of the rotary electric machine 1 according to the third embodiment. Figure 12 is a partial cross-sectional view showing a part of the stator 10a for explaining the features of the rotary electric machine 1a according to the third embodiment. Figure 12 shows the A portion of Figure 11.

Since the rotor 100 in this embodiment is the same as in the first embodiment, its description will be omitted. The relationship between the rotor 100 and the stator 10a will be described later. The stator 10a in this embodiment, as that in the first embodiment, has a plurality of stator slots 13 and slot openings 14 formed to communicate with the inner peripheral surface 11x of the stator core.

Here, in a cross-section perpendicular to the rotation center axis CL, the centerline CL_{O} for the circumferential direction of each slot opening 14, that is, the non-magnetic region, is displaced from the centerline CL_{S} for the circumferential direction of the stator slot 13. The direction and magnitude of this displacement are the same for all slot openings 14. In addition, when the slot opening wall 14b is displaced, the slot opening wall 14b may be displaced to the position of the extension of the slot wall 13b shown by the dashed line, or even further beyond it. The gas present in the gap between the rotor core 120 and the stator 10 is carried circumferentially along with the rotation of the rotor 100. At this time, the inflow of gas into the slot openings 14 and the disturbance of the flow caused by the presence of the slot openings 14 become a cause of increased windage loss in the rotary electric machine 1. The greater the displacement of the slot openings 14, the greater the resistance of the flow of gas into the slot openings, and thus the windage loss decreases.

The stator 10a according to this embodiment is combined with the rotor 100 of the laminated pattern of the first embodiment (FIG. 6). Moreover, if this laminated pattern is used, the stator 10a may also be combined with the second embodiment. In this case, when applied to the first pattern section A, as shown in FIG. 11, the slot opening 14 is shifted to the side opposite to the first flux barrier 122, that is, toward the second flux barrier 126 side or the boundary point P₂₁ side.

It should be noted that the stator 10a should not be combined with the rotor 100 according to the modified example shown in FIGS. 8 and 9. This is because if the first pattern section A and the second pattern section B are mixed in the circumferential direction, the relationship between the stator 10a and the rotor 100 may hold for the first pattern section A but not for the second pattern section B.

With the configuration in the above-described embodiment, it is possible to combine the asymmetry of the rotor 100 and the asymmetry of the stator 10a in such a way that their directions are opposite. As a result, the deformation due to asymmetry is shared between the rotor and the stator, mitigating magnetic saturation in asymmetric openings, thereby improving the skew effect and average torque. Furthermore, by alleviating the rotor's asymmetry, the reduction in mechanical strength can be suppressed. By making the bridges inside the poles asymmetric, it is possible to prevent the decrease in strength associated with the asymmetric shape of outer periphery of the rotor.

It should be noted that if the flux barriers of the rotor and the flux barriers of the stator combined within the same cross-section are shifted in the same direction, an appropriate skewing effect will not be achieved. This is because the relative positional relationship between the rotor and stator flux barriers combined within the cross-section alters the phase of the torque ripple in that section. By sufficiently increasing the phase difference and making it opposite in phase to the torque ripple of the other cross-section, a cancellation effect can be achieved. Therefore, if the flux barriers of the rotor and the flux barriers of the stator that can be combined within the same cross-section are shifted in the same direction, it will hinder changes in their relative positions, causing the phase of the torque ripple not to change and preventing the intended skew effect from being obtained.

According to the embodiment described above, it is possible to provide a rotor and a rotary electric machine that can ensure the effect of reducing torque ripple in a rotary electric machine that actively utilizes reluctance torque, without skewing the permanent magnets.

### [Other embodiments]

While certain embodiments have been described, these embodiments have been presented by way of example only, and are not intended to limit the scope of the inventions. Furthermore, the features of each embodiment may be combined. The embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

### [Reference Numeral List]

1. 1a... Rotary electric machine, 2...Rotor, 2a...First magnet mounting hole, 2b...Second magnet mounting hole, 2c...Outer core section, 2d...Inner core section, 2f...First flux barrier, 2g...Second flux barrier, 2p, 2r...Laminated part, 2x...Outer peripheral surface, 10, 10a...Stator, 11...Stator core, 11x...Inner peripheral surface, 12...Stator teeth, 13...Stator slot, 13a, 13b...Slot wall, 14...Slot opening, 14a, 14b...Flux barrier wall, 15...Stator winding, 20...Bearing, 30...Bearing bracket, 40...Frame, 100, 100a...Rotor, 101...Magnetic pole, 110...Rotor shaft, 120...Rotor core, 120a...Outer core section, 120b...Inner core section, 120c...Central flux barrier, 120p...First laminated section, 120q...Second laminated section, 120r...Third laminated section, 120s...Fourth laminated section, 120x...Outer peripheral surface, 120z...Circumscribed circle, 121...First magnet mounting hole, 122...First flux barrier, 122a...Boundary of the outer part of first flux barrier, 122b...Boundary of the inner part of first flux barrier, 123...Inner part of first magnet mounting hole, 124...First bridge, 125...Second magnet mounting hole, 126...Second flux barrier, 126a...Boundary of the outer part of second flux barrier, 126b...Boundary of the inner part of second flux barrier, 127...Inner part of second magnet mounting hole, 128...Second bridge, 130...Permanent magnet, A, A1...First pattern section, B...Second pattern section, CL...rotation center axis

## Claims

1. A rotor, comprising:
a rotor shaft extending in the axial direction of a rotation center axis;
a plurality of permanent magnets extending in the axial direction and arranged symmetrically with respect to an M-axis that extends perpendicularly from the rotation center axis when viewed in a cross-section perpendicular to the rotation center axis; and
a rotor core mounted radially outside the rotor shaft, the rotor core having the electromagnetic steel plates stacked such that the M axes overlap when viewed in the axial direction, wherein magnetic poles are arranged evenly in the circumferential direction, each magnetic pole including a flux-barrier band that is formed substantially convexly toward the rotation center axis and connects one side of an outer peripheral surface with other side of the outer peripheral surface, the flux barrier band having regions accommodating the permanent magnets, non-magnetic regions, and bridges, the rotor core comprising the non-magnetic regions connecting the outer peripheral surface and the permanent magnets, wherein
the magnetic poles include outer core sections positioned outside in the radial direction of the flux-barrier band and an inner core section positioned inside in the radial direction of the flux-barrier band,
when a boundary point farther from the M-axis is defined as a boundary point P₁₁, a boundary point closer to the M-axis is defined as a boundary point P₂₁ among the boundary points between the outer edge forming the outer peripheral surface of the outer core section and the outer edge facing the non-magnetic region, and a boundary point closer to the boundary point P₁₁ is defined as a boundary point P₁₂, and a boundary point closer to the boundary point P₂₁ is defined as a boundary point P₂₂ among the boundary points between the outer edge forming the outer peripheral surface of the inner core section and the outer edge facing the non-magnetic region, and
when a circumferential angle formed by a line connecting boundary point P₁₁ to the rotation center axis and the M-axis is defined as circumferential angle Θ_{d1}, a circumferential angle formed by a line connecting boundary point P₁₂ to the rotation center axis and the M-axis is defined as circumferential angle Θ_{q1}, a circumferential angle formed by a line connecting boundary point P₂₁ to the rotation center axis and the M-axis is defined as circumferential angle Θ_{d2}, and a circumferential angle formed by a line connecting boundary point P₂₂ to the rotation center axis and the M-axis is defined as circumferential angle Θ_{q2},
circumferential angle Θ_{q1} is larger than circumferential angle Θ_{q2} in a case that circumferential angle Θ_{d1} is larger than circumferential angle Θ_{d2}, and
an adjacent magnetic pole has a shape that is inverted with respect to the M-axis of the specified magnetic pole when viewed from a specified magnetic pole.

2. The rotor according to claim 1, wherein
the flux barrier band has a first bridge and a second bridge formed on either side of the M-axis,
a distance of the first bridge from the M-axis is greater than a distance of the second bridge from the M-axis, or a width of the first bridge is greater than a width of the second bridge, or at least one of these.

3. The rotor according to claim 1, wherein
the rotor satisfies at least one of cases that the shape of the outer edge facing the non-magnetic region including the boundary point P₁₁ differs from the shape of the outer edge facing the non-magnetic region including the boundary point P₂₁, or that the shape of the outer edge facing the non-magnetic region including the boundary point P₁₂ differs from the shape of the outer edge facing the non-magnetic region including the boundary point P₂₂.

4. The rotor according to claim 1, wherein
the rotor core has a portion in which a first electromagnetic steel sheet, in which only the predetermined magnetic poles are arranged circumferentially, and a second electromagnetic steel sheet, in which only magnetic poles having a shape inverted with respect to the M-axis of the predetermined magnetic poles are arranged circumferentially, are stacked adjacent to each other in the axial direction.

5. The rotor according to claim 1, wherein
the rotor core has a third electromagnetic steel sheet in which the predetermined magnetic poles and magnetic poles with a shape inverted about the M-axis of the predetermined magnetic poles are alternately arranged in the circumferential direction.

6. The rotor according to claim 5, wherein
the rotor core has a portion where the third electromagnetic steel sheet and a fourth electromagnetic steel sheet, which is shifted in the circumferential direction by the mechanical angle of the magnetic pole of the third electromagnetic steel sheet, are stacked adjacent to each other in the axial direction.

7. A rotary electric machine, comprising:
the rotor according to any one of claims 4 to 6;
a stator including
a stator core formed to surround the rotor core across a gap on the radially outer side of the rotor core; and
a stator winding having portions accommodated in each of a plurality of stator slots formed between a plurality of stator teeth formed in the stator core, wherein
in a cross section perpendicular to the rotation center axis, the circumferential centerline of the inner peripheral surface of the non-magnetic region, formed to communicate the stator slots with the inner peripheral surface of the stator core, lies on the same line as the circumferential centerlines of the plurality of stator slots.

8. A rotary electric machine, comprising:
the rotor according to claim 5 or claim 6;
a stator including
a stator core formed to surround the rotor core across a gap on the radially outer side of the rotor core, and
a stator winding having portions accommodated in each of a plurality of stator slots formed between a plurality of stator teeth formed in the stator core, wherein
in a cross-section perpendicular to the rotation center axis, the circumferential centerline of the inner peripheral surface of the non-magnetic region, formed so as to communicate the stator slots with the inner peripheral surface of the stator core, is shifted in the same direction relative to the circumferential centerline of each of the multiple stator slots, and in the same cross-section, it is shifted in the direction of the boundary point P₂₁ of the rotor core.
